(19)

Europäisches
Patentamt
European
Patent Office
Office européen
des brevets

(11) **EP 2 151 968 A2**

(12) **EUROPEAN PATENT APPLICATION**

(43) Date of publication:
**10.02.2010 Bulletin 2010/06**

(51) Int Cl.:
***H04L 29/06*** *(2006.01)*

(21) Application number: **09010193.2**

(22) Date of filing: **06.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **07.08.2008 JP 2008203903**

(71) Applicant: **Hitachi CO., LTD.**
**6-6 Marunouchi 1-chome**
**Chiyoda-ku**
**Tokyo 100-8280 (JP)**

(72) Inventors:
• **Hirata, Shinji**
 **Tokyo 100-8220 (JP)**
• **Takahashi, Kenta**
 **Tokyo 100-8220 (JP)**

(74) Representative: **Strehl Schübel-Hopf & Partner**
**Maximilianstrasse 54**
**80538 München (DE)**

(54) **Authentication terminal, authentication server, and authentication system**

(57) In registration, a feature array x[i] obtained by client is basis-transformed into array X[i], transformed with a transformation filter array K[i] into a template array T[i] to be registered in the client. In authentication, the feature array y[i] is basis-transformed into an array Y[i] after inversely sorting and applied to filter K by computation $V[i] = Y[i]K[i]$. The server obtains array $e[i] = Enc(T[i])$, and the client obtains $e'[i] = Enc(\sum_j X[j] Y[j] \alpha^{-ij})$ and shuffles each elements. The shuffled array $e_\sigma'[i]$ is transmitted to the server and then decoded to obtain $C_\sigma'[i]$ which provides determination of whether the feature arrays x and y match with each other or not.

FIG.1

EP 2 151 968 A2

**Description**

BACKGROUND

The present invention relates to an authentication terminal, an authentication server, and an authentication system, for authenticating an individual with biometric information of the individual.

An individual authentication system based on biometric information obtains biometric information of an individual in registration at an initial stage and extracts and registers information referred to as a feature. The registered information is referred to as a template. In an authentication, the system obtains the biometric information from the individual again, extracts the feature, and matches the extracted features with the previously registered template to verify whether the individual is the person oneself.

In a system in which a client and a sever are coupled through a network, if the server performs biometric authentication for a user on a side of the client, typically, the server holds a template. The client obtains the biometric information of the user in authentication, extracts a feature from the biometric information, and transmits the extracted feature to the server which verifies whether the user is the identical person by matching the feature to the template.

However, since the template may provide information for identifying the user as the identical person, a strict control is required for individual information in handling, which results in a high control cost. Although the individual information is strictly controlled, there are many people who are psychologically reluctant to register a template from viewpoint of privacy. Further, the biometric information is unchanged all individual's life and is unable to be easily changed like a password or an encryption key. In consideration of this circumstance, it is possible to perform authentication based on other biometric information. However, there is a limit in the number of pieces of biometric information of the individual. Accordingly, if a danger to falsification occurred as a result of leak of the template, there may be a problem that the biometric information cannot be used safely thereafter. Further, if the same biometric information is registered in different systems, the other systems also encounter the danger.

In consideration of the circumstances, a method called cancelable biometric authentication is proposed in which in registration of biometric information, a feature is transformed with a secret parameter (a kind of encryption key: a transformation parameter) that a client has, holds the transformed feature as a template in a status in which the original information is confidential. In authentication, the client transforms a feature of biometric information newly extracted with the same function and parameter and transmits the transformed feature to the server. The server matches the received feature with the template as the transformed status is kept.

According to the method, because the client confidentially holds the conversion parameter, the server cannot know the feature even in the authentication, so that privacy of the individual is protected. Further, if the template is leaked, security can be kept by preparing the template again after changing the conversion parameter and registering the template. In addition, if the same biometric information is used in different systems, registering different templates obtained by transformation with different parameters prevents security in other systems from decreasing even if one of the templates is leaked.

A specific method of the cancelable biometric authentication depends on a type and a matching algorism of the biometric information. JP 2007-293807A (hereinafter referred to as a first document) discloses a specific method (hereinafter referred to as a correlation invariant and random filtering) applicable to a biometric authentication technology for determining resemblance on the basis of a correlation value of the feature (image) such as a vein authentication.

There is further prior art disclosing other methods relating to the biometric information base authentication technology such as "A New Public-Key Cryptosystem as Secure as Factoring", Okamoto, T. and Uchiyama, S., Proc. EUROCRYPT '98, pp. 308-318; "Public-Key Cryptosystems Based on Composite Degree Residuosity Classes", P. Paillier, Proc. EUROCRYPT '99, pp. 223-238; and "Improvement in Weakness and Security in Cancelable Biometric Authentication Method applicable To Image Matching", Hirata et al., SCIS2007 (hereinafter referred to as second to fourth documents, respectively).

SUMMARY

The first document (JP2007-293807A) discloses as follows:

In registration, a client computes a basis-transformed image X through a basis transformation (Fourier transform, and number theoretic transform and the like) of a feature image x extracted from a body of a user and applies the basis-transformed image X to a randomly generated conversion filter K to perform computation such as $T[i] = X[i]/K[i]$ for each i-th pixel to generate a transformed image T and registers the transformed image T in a server. The transformation filter K is stored in a smart card or the like to be held by the user.

In authentication, the client newly extracts a feature image y from the body of the user and computes a basis-transformed image Y by sorting pixels in vertical and horizontal directions in inverse orders and then performing basis conversion to compute the basis-transformed image Y. The client applies the conversion filter K read out from a smart card of the user to the basis-transformed image Y to perform a computation such as V[i]= Y[i] × K[i] for each i-th pixel to generate a transformed image V and transmits the transformed image V to the server. The server performs computation such as C[i] = T[i] × V[i] (= X[i] × Y[i]) to inverse-basis-transform (inverse Fourier transform, inverse number theoretic transformation) the image C to compute a cross-correlation of $x \otimes y$. The server computes a resemblance between x and y from the cross-correlation to determine whether they are matched or unmatched.

As mentioned above, transmission of x and y after transformation with the secret transformation filter array K to the server allows the server to perform the matching process as x and y are confidential against the server.

However, if a controller of the server tries to estimate with maliciousness, the controller cannot uniquely estimate x and y. However, the controller may be able to narrow a range of candidates to some extent. For example, the server can compute the above-mentioned cross-correlation. However, if it is assumed that x and y represent an image having N pixels, the cross-correlation is also an image (cross-correlation image) of N pixels. From this fact, N-dimension simultaneous equation having unknown variables of x and y pixels (total 2N unknowns) is established. Since the simultaneous equation has too many unknowns, the simultaneous equation cannot be solved. However, it is possible to narrow the solution space from 2N dimension to N dimensions.

Further, if a user repeats the authentication, a simultaneous equation regarding pixel values of the basis-transformed image Y can be established from a relation among pieces of data transmitted to the server. For example, it is assumed that authentication processes are repeated, and feature images are y1, y2, --- ym. Then, it is assumed that basis-transformed images by inversely sorting pixels in each feature image are Y1, Y2, ---, Ym, the data transmitted to the server is V1 = Y1 × K, V2 = Y2 × K, ---, Vm = Ym × K, ---. Thus, the server can compute V1/V2, V1/V 3, ---, and V1/Vm. Here, V1/Vi = Y1/Yi. This can be regarded as a simultaneous equation in which a left side is a known constant value and the right side is an unknown variable. Modifying the equation with respect to i = 2, 3, ---, and m provides (m-1)N-dimensional equation regarding nN unknowns. Due to too many unknown variables, the equation cannot be solved. However, the solution space can be narrowed from mN-dimensions to (m - 1)N-dimensions.

The second to fourth documents do not disclose attack from a server that a sever controller controls with maliciousness (hereinafter referred to as a malicious server).

The invention improves security in cross-correlation invariant random filtering for the cancelable biometric authentication by making it difficult to narrow solutions through the above-mentioned estimation against attack by the malicious server who tries estimation (decrypting ) of the feature.

According to a first aspect of the disclosed system, in biometrics authentication for authenticating an individual on the basis of a cross-correlation between feature arrays of biometrics information of the individual, upon registration, a feature array for registration is extracted from the biometrics information of the user. A transformation filter array of which each element has a random value is further generated. The feature array is transformed with the transformation filter array to compute a transformed-for-registration feature array.

In authentication, a feature array for authentication is extracted from the biometrics information of the user, transformed with the transformation filter array to compute a transformed-for-authentication feature array. Further, without restoring the transformation, a shuffled cross-correlation array in which a cross-correlation array between the feature array for registration and the feature array for authentication are computed. A similarity between the feature array for registration and the feature array for authentication is computed to determine whether the feature array for registration and the feature array for authentication are matched or unmatched.

A second aspect of the disclosed system provides an authentication terminal in an authentication system in which the authentication terminal configured to obtain biometric information of an individual, extract features in the biometric information of the individual as a feature array including a plurality of elements which are arranged, and transform the feature array for authentication into a transformed-for-authentication feature array, and an authentication server configured to match the transformed-for-authentication feature array received from the authentication terminal with a transformed-for-enrollment feature array, to which a feature array for identifying the individual is transformed for registration, to authenticate the individual, are communicably coupled, the authentication terminal comprising: an authentication terminal storage configured to store a transformation filter array including a plurality of elements having random values for transforming the feature array into the transformed-for-authentication feature array and the transformed-for-registration feature array; and a shuffled cross-correlation computing unit configured to compute a cross-correlation between the transformed-for-authentication feature array with the transformed-for-registration feature array received from the authentication server in a encrypted domain against the authentication terminal as a cross-correlation array including a plurality of elements and shuffle the elements in the cross-correlation array as the confidential status is kept to generate a shuffled cross-correlation array.

A third aspect of the disclosed system provides an authentication server in an authentication system in which the authentication terminal configured to obtain biometric information of an individual, extract features in the biometric information of the individual as a feature array including a plurality of elements which are arranged, and transform the feature array for authentication into a transformed-for-authentication feature array, and an authentication server configured to perform matching the transformed-for-authentication feature array received from the authentication terminal with a transformed-for-registration feature array, to which a feature array for identifying the individual is transformed for registration, to authenticate the individual are communicably coupled, the authentication server comprising: an authentication server storage configured to store the transformed-for-registration feature array, wherein the authentication terminal computes a cross-correlation between the transformed-for-authentication feature array with the transformed-for-registration received from the authentication server in a confidential status against the authentication terminal as a cross-correlation array including a plurality of elements and shuffles the elements in the cross-correlation array as the confidential status is kept to generate a shuffled cross-correlation array; an authentication server shuffled cross-correlation computing unit configured to receive from the authentication terminal the shuffled cross-correlation array in which the elements in the cross-correlation array are shuffled as a confidential status is kept and release the confidential status of the received shuffled cross-correlation array to obtain a shuffled cross-correlation array; and a determination unit configured to perform the matching on the basis of the obtained shuffled cross-correlation array to determine identification of the individual.

A fourth aspect of the disclosed system provides an authentication system comprising: an authentication terminal configured to obtain biometric information of an individual, extract features in the biometric information of the individual as a feature array including a plurality of elements which are arranged, and transform the feature array for authentication into a transformed-for-authentication feature array; an authentication server configured to match the transformed-for-authentication feature array received from the authentication terminal with a transformed-for-registration feature array, to which a feature array for identifying the individual is transformed for registration, to authenticate the individual, the authentication terminal and the authentication server being communicably coupled, wherein the authentication terminal comprises: an authentication terminal storage configured to store a transformation filter array including a plurality of elements having random values for transforming the feature array into the transformed-for-authentication feature array and the transformed-for-registration feature array; and an authentication terminal shuffled cross-correlation computing unit configured to compute a cross-correlation between the transformed-for-authentication feature array with the transformed-for-registration feature array received from the authentication server in a confidential status against the authentication terminal as a cross-correlation array including a plurality of elements and shuffle the elements in the cross-correlation array as the confidential status is kept to generate a shuffled cross-correlation array, and wherein the authentication server comprises: an authentication server storage configured to store the transformed-for-registration feature array; an authentication server shuffled cross-correlation computing unit configured to receive the shuffled cross-correlation array from the authentication terminal and decrypt the received encrypted shuffled cross-correlation array to obtain a shuffled cross-correlation array; and a determination unit configured to perform the matching on the basis of the obtained shuffled cross-correlation array to determine identification of the individual.

According to the teaching herein, in a correlation invariant random filtering, it is difficult to narrow solutions according the above-mentioned estimation against attack by malicious server to improve security.

These and other benefits are described throughout the present specification. A further understanding of the nature and advantages of the invention may be realized by reference to the remaining portions of the specification and the attached drawings.

## BRIEF DESCRIPTION OF THE DRAWINGS

Fig. 1 is a block diagram of an authentication system according to the embodiment;
Fig. 2 is a flowchart of an example of a registration process of biometric information according to the embodiment;
Fig. 3 is an example of an authentication process of the biometric information according to the embodiment;
Fig. 4 shows feature arrays x, y, and y' according to the embodiment;
Fig 5 shows a transformation filter array K according to the embodiment; and
Fig. 6 is a block diagram of hardware of the client and the server according to the embodiment.

## DETAILED DESCRIPTION OF THE INVENTION

Hereinbelow will be described an embodiment of the present invention. In the embodiment, a cancelable biometric authentication system is exemplified in which a feature of biometric information is transformed and matching of the biometric information is performed within a server with the information confidential against the server.

Structure

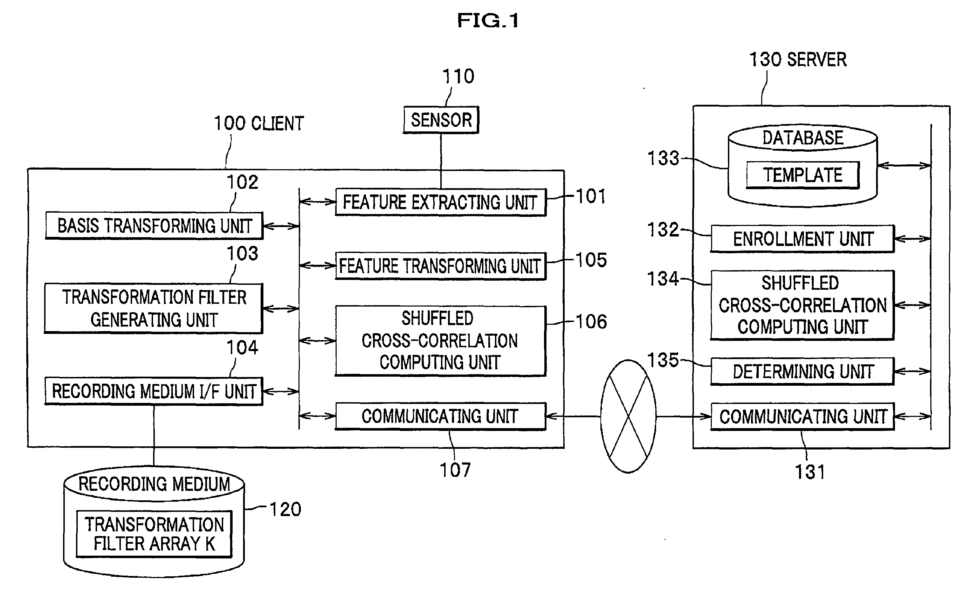

Fig. 1 is a block diagram of a cancelable biometric authentication system according to the embodiment of the present invention.

The cancelable biometric authentication system according to the embodiment is configured with an authentication terminal (hereinafter client) 100 and an authentication server (hereinafter referred to as a server) 130 which are coupled to each other through a network such as the Internet or an intra-net. The client 100 obtains biometric information in registering and authentication, extracts a feature, and transforms the feature. The server 130 holds templates and performs matching.

The client 100 is controlled by the user itself or a reliable third party, has a sensor 110 for obtaining biometric information such as a fingerprint and a vein pattern, and reads data from and writes data on a recording medium 120. The recording medium 120 may be controlled by the user as a portable recording medium such as a Smart card, a USB (Universal Serial Bus) memory, and a recording medium such as a hard disk drive fixedly coupled to the client 100. For example, if Internet banking is done by a user at home, there may be a configuration in which the client 100 is a personal computer of the user at home, and the server 130 is a server controlled by a bank.

The client 100 includes: a feature extracting unit 101 for extracting a feature from biometric information obtained by the sensor 110 as a feature array including a predetermined number of elements (the elements and array will be described later); a basis transforming unit 102 for basis-transforming the feature array; a transformation filter generating unit 103 for generating, for example, a transformation filter array for random transformation as a transformation filter array including a predetermined number of elements.

The client 100 further includes: a recording medium interface (I/F) unit 104 for recording and reading the transformation filter on and from the recording medium 120; a feature transforming unit 105 for generating a feature for registration (template) and a feature for authentication through transformation; a shuffled cross-correlation computing unit 106 for performing computation so as to disclose to the server 130 a shuffled cross-correlation (array) in which each element in a cross-correlation array between the futures for registration and the feature for authentication is shuffled with the feature for registration and the features of authentication confidential; and a communicating unit 107 for communicating with the server 130.

The biometric information is data such as a fingerprint image, a vein pattern image, and iris image. The feature includes an image obtained by binarizing an image of, for example, the fingerprint or the vein pattern through an enhancement process and a bit stream called an iris code generated from an iris image.

Further, it is assumed that the resemblance between two features is computed from the cross-correlation thereof. Regarding the matching algorism for computing the resemblance on the basis of the cross-correlation, an algorism (cross-correlation invariant random filtering) for computing the resemblance in which two features are subject to a special transformation as they are confidential without restoring the features to original ones is known. The embodiment provides an advantageous effect in increasing confidentiality by improving the cross-correlation random filtering. The cross-correlation random filtering is described in the first and fourth documents in detail.

The server 130 includes: a communicating unit 131 for communicating with the client 100; a database 133 for storing and controlling the template; and a enrollment unit 132 for registering the template received from the client 100 in the database 133.

The server 130 further includes: a shuffled cross-correlation computing unit 134 for computing a shuffled cross-correlation between the feature for authentication and the feature for registering which is original of the template without the feature for authentication extracted by the client 100 unknown; and a determining part 135 for matching the feature for registration and the feature for authentication and determining whether the feature for registration and the feature for authentication are matched or not from the shuffled cross-correlation.

The template controlled in the database 133 is registered so as to be associated with a login ID and a password for the user upon logging in authentication. In authentication, the user inputs the login ID and the password in the client 100 through an input unit (for example, a keyboard). In response to this, the server 130 searches the database 133 for the associated template with the login ID and the password as search keys and reads the associated template to perform the cancelable authentication according to the embodiment. The description of the login ID and the password will be omitted hereinafter.

Registration Process Flow

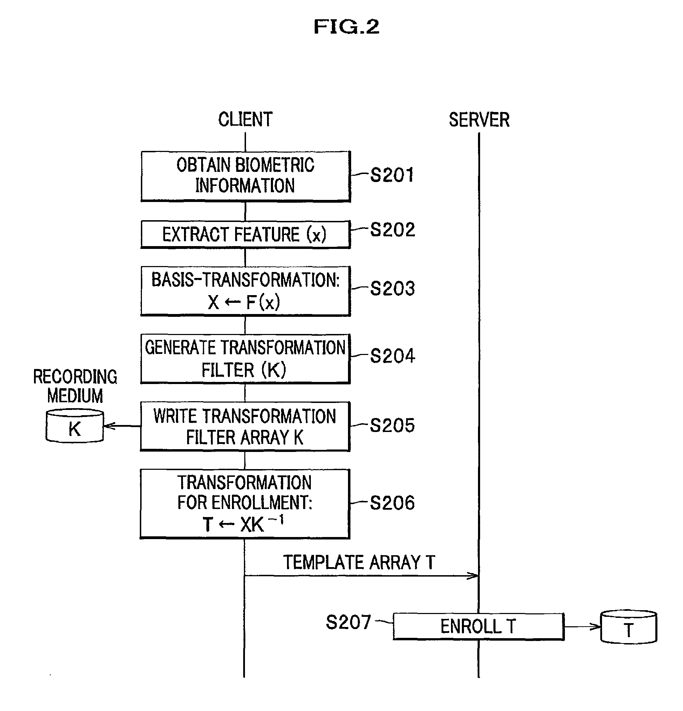

With reference to Fig. 2, will be described a flow of a registration process of the biometric information according to the embodiment of the present invention.

The sensor 110 obtains biometric information of the user (step S201).

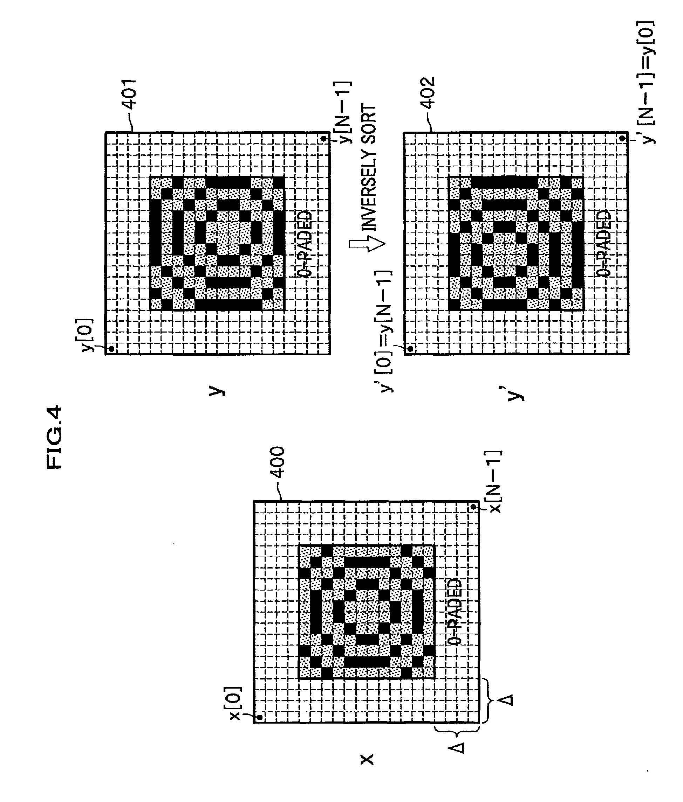

The feature extracting part 101 in the client 100 extracts a feature from the biometric information (step S202). Here, it is exemplified that the feature is brightness in a two-dement ional image (feature image) including N pixels (elements). At a peripheral part of the feature image, a value of zero is set as brightness values with a predetermined width Δ (padding the peripheral part with zero) as shown in a padded image 400 in Fig. 4. This is provided for computing a linear convolution (cyclic convolution) when a cross-correlation is computed through the basis transformation such as discrete Fourier transform or numeric theoretic transformation.

Δ is determined on the basis of a tolerance in displacement in the vertical and horizontal directions in matching the feature images each other upon authentication. For example, if a displacement of the $\pm$ four pixel width in the vertical and horizontal direction is permitted, Δ = 4. A feature array x is defined by arranging in a predetermined order N pixels which are the feature of the image after padding with zero. To simplify the description, it is assumed that respective elements of x are represented by a one-dimensional array x [i] (i = 0 to N - 1) and a brightness x [h $\times$ W + w] at coordinate (w, h) ($0 \le w < W, 0 \le h \le H$), if the size of the image after padding with zero is W $\times$ H. Further, a value of the brightness value is an integer greater than 0 and less than θ. Accordingly, the number of pixels in the feature image is N. However, the number of pixels at a part providing the biometric information after padding with zero is W $\times$ H.

Next, the basis transforming unit 102 basis-transforms the feature array x by applying a function F (step S203). The basis transform (F (x)) generates a basis-transformed feature array X. The basis transform may be any having a nature of the cyclic convolution such as the discrete Fourier transform and the number theoretic transformation. Here, the number theoretic transformation is used. A definition in the number theoretic transformation is a finite field GF(p) (p is a prime number). The basis transform is described in the first and fourth documents in detail. A size (the number of elements) of the basis-transformed feature array X is N.

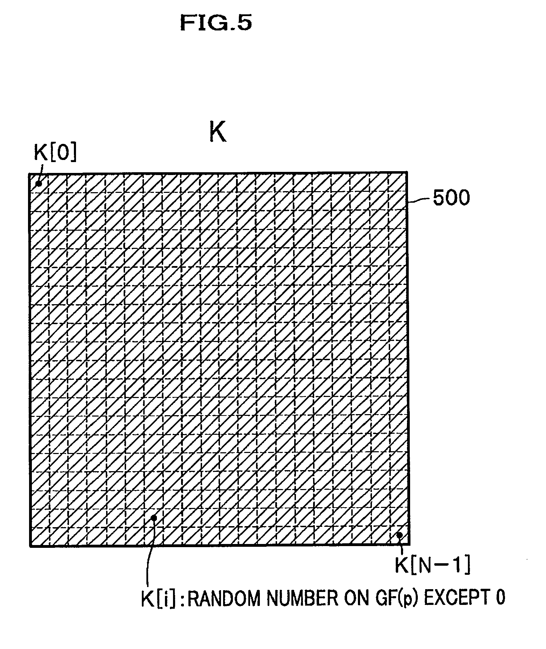

Next, the transformation filter generating unit 103 generates a transformation filter having the same size of N as the basis transformed feature array X (step S204). The generated transformation filter is a transformation filter array K in which N elements are arranged in a predetermined order. As shown in Fig. 5, each element K [i] (i = 0 to N -1) of the transformation filter array K 500 is generated as a random integer being not 0 (a uniform random number greater than one and equal to or less than p - 1). There is a method of generating a random number stream in which a pseudo random number sequence is computed by applying a given a seed value (for example, time or an externally input value such as an inputted random number with a keyboard (input unit), or the like) to a pseudo random number generator (not shown).

Next, the recording medium interface unit 104 writes the transformation filter array K on the recording medium 120 (step S205).

Next, the feature transforming unit 105 transforms (for registration) the basis-transformed feature array X with the transformation filter array K (step S206). The feature transforming unit 105 obtains as result of transformation a template array (transformed feature array for registration) as a template array T and transmits the template array T to the server 130. More specifically, at each element of the array, computation given by Eq. (1) is performed to generate the template array T.

$$T[i] = X[i] \times (K[i])^{-1} \quad (i = 0, 1, \cdots, N - 1)$$

$$\text{--- (1)}$$

where (k [i])$^{-1}$ represents a multiplicative inverse element of K[i] in the finite field GF (p) and multiplication is also performed on the infinite field GF (p). Because each element of the transformation filter array K is a random value, the server 130 cannot know the basis-transformed feature array X from the template array T.

Next, the server 130 receives the template array T from the client 100, and the registering unit 132 registers the template array T in the database 133 as a template (step S207).

The above is the registering process flow according to the embodiment.

Authentication Process Flow

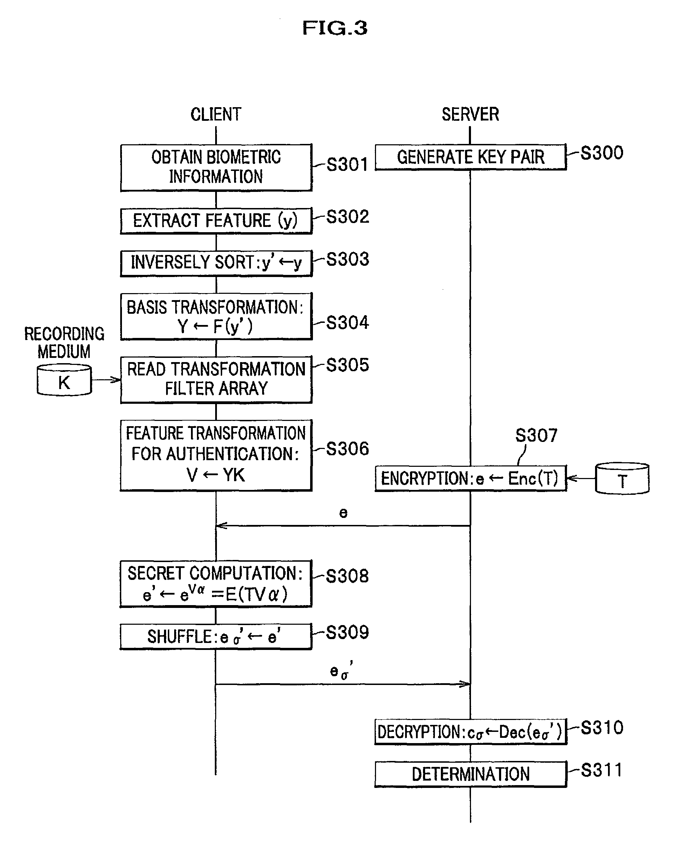

With reference to Fig. 3 will be described an authentication process flow of the biometric information according to the embodiment.

The shuffled cross-correlation computing unit 134 in the server 130 generates a key pair including a public key PK for encryption and a secret key SK for decrypting in accordance with a predetermined public key encryption method (step S300). Here, as the public key encryption method, a method whose encryption function Enc (•) satisfies the following homomorphic encryption characteristic (Eq. (2)) should be used for the public key encryption method.

$$Enc(m_1) \times Enc(m_2) = Enc(m_1 + m_2)$$

$$--- (2)$$

where $m_1$ and $m_2$ are, for example, vectors.

In addition, there are examples of homomorphic encryption method such as Okamoto-Uchiyama encryption (see the second document) and Paillier encryption (see the third document).

Next, the sensor 110 obtains the biometric information of the user (step S301).

Next, the feature extracting unit 101 in the client 100 extracts the feature from the biometric information obtained by the feature extracting unit 101 (step S302). At the same time as the registration, the peripheral part of the feature image is subject to padding with zero as shown by the padded feature image 401 in Fig. 4. An array representing a feature of the feature image padded with zero where N pixels are arranged in a predetermined sequence order is defined as a feature array y.

Next, each element of the feature array y is sorted in an inverse order to generate an array y' 402 (step S303). It is noted that convolution of the feature array x and the array y' becomes a cross-correlation between x and y.

The basis transforming part 102 performs basis transformation by applying the function F to the array y' (step S304). The basis transformation (F(y')) generates a basis-transformed feature array Y. A size of Y is N which is the same as that of the basis-transformed feature array X in registration.

Next, the recording medium interface unit 104 reads the transformation filter array K from the recording medium 120 (step S305).

The feature transforming unit 105 transforms (perform transformation for authentication) the basis-transformed feature array Y with a transformation filter array K (step S306). The feature array for authentication (transformed-for-authentication feature array) generated by transformation is regarded as an authentication feature array V for authentication which is transmitted to the server 130. More specially, the authentication feature array is computed in accordance with Eq. (3). Further, multiplication is performed on the infinite field GF(p).

$$V[i] = Y[i] \times K[i] \quad (i = 0, 1, \cdots, N-1)$$

$$--- (3)$$

Next, the shuffled cross-correlation computing unit 134 in the server 130 reads the template array T from the database 133, encrypts each element in the template array T in accordance with Eq. (4) with the public key PK to generate an encrypted template array e, and transmits the template array e to the client 100 (step S307).

$$e[i] = Enc(T[i]) \quad (i = 0, 1, \cdots, N-1)$$

$$--- (4)$$

Next, the client 100 receives the encrypted template array e, and the shuffled cross-correlation computing unit 106 computes the array e' (secret computation) in accordance with Eq. (5) (step S308).

$$e'[i] = \prod_{j=0}^{N-1} e[j]^{V[j]\alpha^{-ij}} \quad \left(i = 0, 1, \cdots, N-1\right)$$

$$--- (5)$$

where $\alpha$ is a primitive N-th root of 1 on the infinite field GF (p) which is a basis transformation constant for transforming a basis defined on the infinite field GF(p) to another basis. Here, Eq. (6) is given from the homomorphic encryption characteristic Eq. (2) of the encryption function Enc (•) and Eqs. (1) and (3).

$$e'[i] = \prod_{j=0}^{N-1} Enc(T[j])^{V[j]\alpha^{-ij}}$$

$$= \prod_{j=0}^{N-1} Enc(T[j]V[j]\alpha^{-ij})$$

$$= Enc\left(\sum_{j=0}^{N-1} T[j]V[j]\alpha^{-ij}\right)$$

$$= Enc\left(\sum_{j=0}^{N-1} X[j]Y[j]\alpha^{-ij}\right)$$

$$--- (6)$$

Further, an array c of a cross-correlation between the original feature x and the feature y at each element is given by Eq. (7).

$$c[i] = \sum_{j=0}^{N-1} X[j]Y[j]\alpha^{-ij}$$

$$\text{--- (7)}$$

Accordingly Eq. (8) is given.

$$e'[i] = Enc\big(c[i]\big)$$

$$\text{--- (8)}$$

As shown in Eq. (8), the array e' represents encrypted values of the array c.

After that, the shuffled cross-correlation computing unit 106 in the client 100 shuffles the array e' for each element (step S309). Shuffling is provided by repeating random replacement for each element of the array. The client 100 transmits to the server 130 an array $e_\sigma$' obtained by shuffling the array e'.

It is noted that a rule of shuffling depends on each authentication process and is temporarily determined. The client 100 includes the pseudo random number generator (not shown) and causes the pseudo random number generator to compute a pseudo random number sequence by applying a seed value to provide the rule.

A period is set to the generated rule such that the rule is valid up to completion of the current authentication process. When the period expires, the rule and the pseudo random number sequence is scrapped.

Because the client 100 does not know the secret key SK, the client 100 cannot decode the encrypted information, so that the client 100 cannot know T[i] or X[i]. Accordingly, if an attacker illegally use the client to communicate with the server, and analyzes a communication log, the attacker cannot obtain the template array T or the original feature array x.

Next, the server 130 receives the array $e_\sigma$', and the shuffled correlation computing unit 134 decodes the array $e_\sigma$' with the secret key SK for each element to obtain the shuffled cross-correlation $c_\sigma$ (step S310).

$$c_\sigma[i] = Dec(e_\sigma'[i]) \quad \big(i = 0,1,\cdots,N-1\big)$$

$$\text{--- (9)}$$

where Dec (•) represent a decoding function.

The server 130 can know the cross-correlation in a status that elements are shuffled for each element, but cannot know the cross-correlation arranged in a correct order. Accordingly, simultaneous equations based on cross-correlation in which original features x and y are unknown variables cannot be established, so that it is impossible to narrow the solution space.

Finally, the determining unit 135 determines whether the original features x and y match with each other or not from the shuffled cross-correlation array $c_\sigma$ (step S311 ). Because a maximum value can be obtained from the shuffled cross-correlation array $c_\sigma$, the determination can be performed by a known method such as a method of determining whether the maximum value exceeds a threshold value.

The above is description of the authentication process flow according to the embodiment.

According to the above-mentioned process, the server 130 can perform authentication correctly, but cannot know the original features x and y. In fact, if a malicious server tried to generate from cross-correlation functions of x and y simultaneous equations regarding x and y, the server 130 can know only the shuffled cross-correlation $c_\sigma$. Ac-

cordingly, the server cannot generate simultaneous equations of x and y, which makes it difficult that the malicious server estimate x and y. Thus, security against an illegal access by a server controller can be improved.

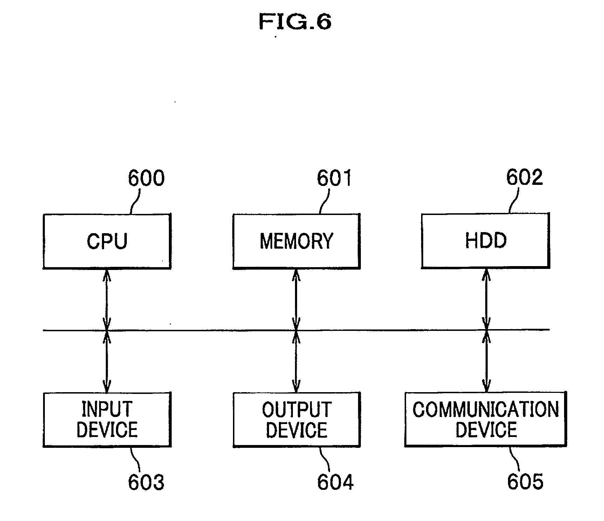

Fig. 6 is a block diagram showing hardware of the client 100 and the server 130. The client 100 and the server 130 each include: a CPU (Central Processing Unit: controller) 600; a memory 601 (storage) comprising a RAM (Random Access Memory) functioning as a memory region; a HDD (a hard disk drive: storage) 602 for storing a program for executing data processing (particularly, the registering process flow and the authentication process flow) by the CPU 600 and the database or the like used as an external storage; an input device 603 (input unit) such as a keyboard and mouse; an output device 604 (output unit) such as a display; and a communication device 605, which are a hardware resource.

The controller may read a program from a ROM (Read Only Memory) storing the program and execute a predetermined information process. The program stored in the recording medium is installed in the storage, and the controller executes processes instructed by the installed program with hardware.

According to the embodiment, there is provided a cancelable biometric authentication system capable of preventing the biometric information from leaking from the authentication server. This system provides authentication on the basis of cross-correlation between features of biometric information, so that the authentication can be done with the biometric information of the user confidential against the authentication server. Accordingly, the system provides a high security against a high level attack such that a controller of the authentication server illegally accessed the system to know the biometric feature of the user.

The embodiment is preferable to embody the present invention, but the present invention is not limited to this embodiment. In other words, the embodiment can be modified without departure from the subject matter of the present invention.

First Modification

For example, in the above-mentioned embodiment, in the registration, the transformation filter array K is written in the recording medium 120 of the client 100 (see step S205). However, in place of writing the transformation filter array K on the recording medium 120, the seed value input to the pseudo random number generator to generate the transformation filter array K may be written on the recording medium 120. Writing the seed value on the recording medium 120 can considerably reduces a data quantity.

In this case, upon authentication, after the client 100 reads the seed value from the recording medium 120, the transformation filter generating unit 103 generates the a transformation filter array K with the seed value. The basis transformation feature array Y is transformed with the transformation filter array K (see the step S306).

Second Modification

Further, in the embodiment, the transformation filter array K is stored on the recording medium 120 in the client 100 and the database 133 in the server 130 stores the template array T (see step S205 and step S207). However, the database 133 in the server 130 may store the transformation filter array K. As mentioned above, inversely storing makes the data stored in the server 130 completely random. This allows the server 130 not to store information about the original feature array x.

In this case, in the authentication, the client 100 reads the template array T from the recording medium 120. On the other hand, the server 130 applies the generated public key PK to the transformation filter array K read out from the database 133 to encrypt the transformation filter array K (see step S307). When receiving the encrypted transformation filter array K, the client 100 transforms the basis-transformed array Y into an authentication feature array V with the template array T. Because the homomorphic encryption method is used, there is no change in the secret computation after that (see step S308, Eq. (6)).

In this case, as mentioned above, the seed value to be input into the pseudo random number generator to generate the transformation filter array K, may be stored in the database 133 in the server 130 in place of the transformation filter array K.

Third Modification

In the embodiment, in registration, each element $X[i]$ of the basis-transformed array X is multiplied by the multiplicative inverse element $k[i]^{-1}$ of each element $K[i]$ of the transformation filter array K (see step S206). In authentication, the basis-transformed array Y is multiplied by each element $K[i]$ of the transformation filter array K as it is (see step S306).

However, inversely, each element $X[i]$ of the basis-transformed feature array X can be multiplied with each element $K[i]$ of the transformation filter array K, and the basis-transformed feature array Y may be multiplied by the multiplicative inverse element $(K[i])^{-1}$ of each element $K[i]$ of the transformation filter array K.

Further, specific structure elements such as the hardware, software, and respective flowchart can be modified without departure from the subject matter of the present invention.

The present invention is applicable to a given application for user authentication based on the biometric information. For example, the present invention is applicable to information access control in an intranet, an identification of the user in the Internet banking system or an ATM (Automated Teller Machine), logging in a Web side for registered members, identification of a person for entranced into a protected area, and logging in a personal computer.

The specification and drawings are, accordingly, to be regarded in an illustrative rather than a restrictive sense. It will, however, be evident that various modifications and changes may be made thereto without departing from the spirit and scope of the invention as set forth in the claims.

**Claims**

1. An authentication terminal in an authentication system in which
   the authentication terminal configured to obtain biometric information of an individual, extract features in the biometric information of the individual as a feature array including a plurality of elements which are arranged, and transform the feature array for authentication into a transformed-for-authentication feature array, and
   an authentication server configured to match the transformed-for-authentication feature array received from the authentication terminal with a transformed-for-enrollment feature array, to which a feature array for identifying the individual is transformed for registration, to authenticate the individual, are communicably coupled, the authentication terminal comprising:

   an authentication terminal storage configured to store a transformation filter array including a plurality of elements having random values for transforming the feature array into the transformed-for-authentication feature array and the transformed-for-registration feature array; and
   a shuffled cross-correlation computing unit configured to compute a cross-correlation between the transformed-for-authentication feature array with the transformed-for-registration feature array received from the authentication server in a encrypted domain against the authentication terminal as a cross-correlation array including a plurality of elements and shuffle the elements in the cross-correlation array as the confidential status is kept to generate a shuffled cross-correlation array.

2. The authentication terminal as claimed in claim 1, further comprising a basis transforming unit configured to perform a basis transformation of the feature array to calculate the cross-correlation array by a cyclic convolution.

3. The authentication terminal as claimed in claim 2, wherein the basis transformation comprises a number theoretic transformation in which a predetermined finite field is defined.

4. The authentication terminal as claimed in claim 2, wherein the basis transformation comprises a discrete Fourier transform.

5. An authentication server in an authentication system in which
   the authentication terminal configured to obtain biometric information of an individual, extract features in the biometric information of the individual as a feature array including a plurality of elements which are arranged, and transform the feature array for authentication into a transformed-for-authentication feature array, and
   an authentication server configured to perform matching the transformed-for-authentication feature array received from the authentication terminal with a transformed-for-registration feature array, to which a feature array for identifying the individual is transformed for registration, to authenticate the individual are communicably coupled, the authentication server comprising:

   an authentication server storage configured to store the transformed-for-registration feature array, wherein the authentication terminal computes a cross-correlation between the transformed-for-authentication feature array with the transformed-for-registration received from the authentication server in a confidential status against the authentication terminal as a cross-correlation array including a plurality of elements and shuffles the elements in the cross-correlation array as the confidential status is kept to generate a shuffled cross-correlation array;
   an authentication server shuffled cross-correlation computing unit configured to receive from the authentication terminal the shuffled cross-correlation array in which the elements in the cross-correlation array are shuffled as a confidential status is kept and release the confidential status of the received shuffled cross-correlation array to obtain a shuffled cross-correlation array; and
a determination unit configured to perform the matching on the basis of the obtained shuffled cross-correlation array to determine identification of the individual.

6. The authentication server as claimed in claim 5, wherein the determination unit inverse-basis-transforms the shuffled cross-correlation array obtained by basis-transforming the feature array to allow the authentication terminal to calculate the cross-correlation array by a cyclic convolution.

7. The authentication server as claimed in claim 6, wherein the basis transformation comprises a number theoretic transformation in which a predetermined finite field is defined.

8. The authentication server as claimed in claim 6, wherein the basis transformation comprises a discrete Fourier transform.

9. The authentication server as claimed in claim 5, wherein the authentication server shuffled cross-correlation computing unit reads out the transformed-for-registration feature array of the individual from the authentication server storage, encrypts the received transformed-for-registration feature array with homomorphic Encryption for confidentiality and transmit the encrypted transformed-for-registration feature array to the authentication terminal and when receiving the encrypted transformed-for-registration feature array form the authentication terminal, the authentication server shuffled cross-correlation computing unit decodes the encrypted transformed-for-registration feature array regarding the homomorphic Encryption to obtain a shuffled cross-correlation array without confidentiality.

10. The authentication server as claimed in claim 9, wherein the homomorphic Encryption comprises Okamoto-Uchiyama encryption.

11. The authentication server as claimed in claim 9, wherein the homomorphic Encryption comprises Paillier encryption.

12. An authentication system comprising:

an authentication terminal configured to obtain biometric information of an individual, extract features in the biometric information of the individual as a feature array including a plurality of elements which are arranged, and transform the feature array for authentication into a transformed-for-authentication feature array;
an authentication server configured to match the transformed-for-authentication feature array received from the authentication terminal with a transformed-for-registration feature array, to which a feature array for identifying the individual is transformed for registration, to authenticate the individual, the authentication terminal and the authentication server being communicably coupled, wherein the authentication terminal comprises:

an authentication terminal storage configured to store a transformation filter array including a plurality of elements having random values for transforming the feature array into the transformed-for-authentication feature array and the transformed-for-registration feature array; and
an authentication terminal shuffled cross-correlation computing unit configured to compute a cross-correlation between the transformed-for-authentication feature array with the transformed-for-registration feature array received from the authentication server in a confidential status against the authentication terminal as a cross-correlation array including a plurality of elements and shuffle the elements in the cross-correlation array as the confidential status is kept to generate a shuffled cross-correlation array, and wherein the authentication server comprises:

an authentication server storage configured to store the transformed-for-registration feature array;
an authentication server shuffled cross-correlation computing unit configured to receive the shuffled cross-correlation array from the authentication terminal and decrypt the received encrypted shuffled cross-correlation array to obtain a shuffled cross-correlation array; and
a determination unit configured to perform the matching on the basis of the obtained shuffled cross-correlation array to determine identification of the individual.

# FIG.1

**110**
SENSOR

**100 CLIENT**

**102**
BASIS TRANSFORMING UNIT

**103**
TRANSFORMATION FILTER GENERATING UNIT

**104**
RECORDING MEDIUM I/F UNIT

**101**
FEATURE EXTRACTING UNIT

**105**
FEATURE TRANSFORMING UNIT

**106**
SHUFFLED CROSS-CORRELATION COMPUTING UNIT

COMMUNICATING UNIT

**107**

RECORDING MEDIUM

TRANSFORMATION FILTER ARRAY K

**120**

**130 SERVER**

DATABASE

**133**
TEMPLATE

**132**
ENROLLMENT UNIT

**134**
SHUFFLED CROSS-CORRELATION COMPUTING UNIT

**135**
DETERMINING UNIT

COMMUNICATING UNIT

**131**

EP 2 151 968 A2

# FIG.2

CLIENT

| | |
|---|---|
| OBTAIN BIOMETRIC INFORMATION | S201 |
| EXTRACT FEATURE (x) | S202 |
| BASIS-TRANSFORMATION: $X \leftarrow F(x)$ | S203 |
| GENERATE TRANSFORMATION FILTER (K) | S204 |
| WRITE TRANSFORMATION FILTER ARRAY K | S205 |
| TRANSFORMATION FOR ENROLLMENT: $T \leftarrow XK^{-1}$ | S206 |

RECORDING MEDIUM
K

SERVER

TEMPLATE ARRAY T

S207 — ENROLL T → T

## FIG.3

CLIENT      SERVER

| | |
|---|---|
| OBTAIN BIOMETRIC INFORMATION — S301 | GENERATE KEY PAIR — S300 |

EXTRACT FEATURE (y) — S302

INVERSELY SORT: $y' \leftarrow y$ — S303

BASIS TRANSFORMATION: $Y \leftarrow F(y')$ — S304

RECORDING MEDIUM

K

READ TRANSFORMATION FILTER ARRAY — S305

FEATURE TRANSFORMATION FOR AUTHENTICATION: $V \leftarrow YK$ — S306

S307

ENCRYPTION: $e \leftarrow Enc(T)$ — T

e

SECRET COMPUTATION: $e' \leftarrow e^{V\alpha} = E(TV\alpha)$ — S308

SHUFFLE: $e'_\sigma \leftarrow e'$ — S309

$e'_\sigma$

DECRYPTION: $c_\sigma \leftarrow Dec(e'_\sigma)$ — S310

DETERMINATION — S311

FIG.4

# FIG.5

K

K[0]

500

K[N−1]

K[i]: RANDOM NUMBER ON GF(p) EXCEPT 0

# FIG.6

```
    600              601              602
┌──────────┐   ┌──────────┐   ┌──────────┐
│   CPU    │   │  MEMORY  │   │   HDD    │
└──────────┘   └──────────┘   └──────────┘
     ↕              ↕              ↕
─────┼──────────────┼──────────────┼─────
     ↕              ↕              ↕
┌──────────┐   ┌──────────┐   ┌──────────────┐
│  INPUT   │   │ OUTPUT   │   │COMMUNICATION │
│  DEVICE  │   │ DEVICE   │   │   DEVICE     │
└──────────┘   └──────────┘   └──────────────┘
    603            604             605
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007293807 A

### Non-patent literature cited in the description

- **Okamoto, T. ; Uchiyama, S.** A New Public-Key Cryptosystem as Secure as Factoring. *Proc. EURO-CRYPT '98,* 308-318
- **P. Paillier.** Public-Key Cryptosystems Based on Composite Degree Residuosity Classes. *Proc. EU-ROCRYPT '99,* 223-238
- **Hirata et al.** Improvement in Weakness and Security in Cancelable Biometric Authentication Method applicable To Image Matching. *SCIS2007,* 2007